# EUROPEAN PATENT APPLICATION

(11) **EP 2 546 127 A1**
(43) Date of publication of application: **16.01.2013**
(21) Application number: 11189756.7
(22) Date of filing: 18.11.2011
(51) Int. Cl.: B62J 99/00, G01L 3/10

(54) **Force measuring device for a bicycle**

(30) Priority: 13.07.2011 TW 100212838
(71) Applicant: Xu, Hong-Jun, New District, Wuxi City (TW)
(72) Inventor: HSU, Ching-Feng, 11045 Taipei City (TW)
(74) Representative: Popp, Eugen

(57) **Abstract**

A force measuring device (100) for a bicycle (4) includes a sleeve shell (2) having outer and inner tubular walls (21, 22) which are disposed between a bottom bracket shell (45) and a spindle (46), a ring body (32) disposed on the inner tubular wall (22) and having a shiftable region (327) which is configured to make a shifting movement corresponding to a treading force (F1) exerted on the spindle (46), a sensor holding unit (31) defining a sensor activating zone (313) and extending radially though the outer tubular wall (21), and a hall sensing unit (33) including a sensor (33) which is disposed in the sensor activating zone (313), and a magnetic member (332) which is displaceable with the shifting movement to change a magnetic field generated thereby so as to give off a signal indicative of the magnitude of the treading force (F1).

## Description

This invention relates to a force measuring device, more particularly to a force measuring device adapted for mounting in a bottom bracket of a bicycle.

Generally, the treading force exerted by a cyclist during cycling will cause deformation of the bicycle frame, i.e., a displacement of two construction parts relative to each other. A measuring device is employed to measure such a displacement for calculating a magnitude of the force which is exerted on the bicycle by a bicycle chain. Such measurement data can be collected and subsequently analyzed and recorded. Conventional bicycle chain force measuring devices are typically mounted on a rear wheel axle since the bending occurring in the rear wheel axle is a good measure of the tension present in a bicycle chain, such as those disclosed in WO 03/073057 A1, WO 01/30643 A1, and US 7,814,800 B2. However, the bending of the rear wheel axle which is to be measured is not truly representative of the treading force since the treading force is transmitted to the rear wheel axle from crank arms through a chainwheel and a chain.

An object of the present invention is to provide a force measuring device which is adapted to be mounted in a bottom bracket assembly of a bicycle so as to accurately measure a force exerted on a crank axle of the bicycle.

According to this invention, the force measuring device includes a sleeve shell configured to be inserted between a spindle and a bottom bracket shell of a bottom bracket assembly. The sleeve shell has outer and inner tubular walls which are radially spaced apart from each other to define a surrounding clearance, and which are in abutting engagement with the bottom bracket shell and an antifriction bearing unit, respectively. A ring body is disposed on and movable with the inner tubular wall, and has an outer ring surface confronting and spaced apart from the outer tubular wall. The outer ring surface has a shiftable region configured to make a shifting movement corresponding to a treading force exerted on the spindle. A sensor holding unit defines a sensor activating zone disposed to confront the shiftable region, and extends radially through the outer tubular wall. A hall sensing unit includes a sensor which is disposed in the sensor activating zone and held to be unmoved relative to the outer tubular wall, and a magnetic member which is disposed to be displaceable with the shifting movement of the shiftable region, and which is spaced apart from the sensor by a predetermined distance such that a magnetic field generated thereby is changed when the magnetic member is displaced with the shifting movement so as to give off a signal indicative of the magnitude of the treading force.

Other features and advantages of the present invention will become apparent in the following detailed description of the preferred embodiments of the invention, with reference to the accompanying drawings, in which:
Fig. 1 is a schematic side view of a bicycle incorporating a force measuring device of this invention;
Fig. 2 is an enlarged perspective view of the first embodiment of the force measuring device incorporated in a bottom bracket assembly of the bicycle;
Fig. 3 is an exploded perspective view of the first embodiment;
Fig. 4 is an exploded perspective view of the first embodiment taken from another angle;
Fig. 5 is a partly sectioned, perspective view of the first embodiment;
Fig. 6 is a perspective view of the second embodiment of the force measuring device according to this invention;
Fig. 7 is an exploded perspective view of the second embodiment;
Fig. 8 is a partly sectioned, perspective view of the second embodiment;
Fig. 9 is a perspective view of the third embodiment of the force measuring device according to this invention;
Fig. 10 is an exploded perspective view of the third embodiment;
Fig. 11 is a partly sectioned, perspective view of the third embodiment;
Fig. 12 is a perspective view of the fourth embodiment of the force measuring device according to this invention;
Fig. 13 is an exploded perspective view of the fourth embodiment; and
Fig. 14 is a partly sectioned, perspective view of the fourth embodiment.

Before the present invention is described in greater detail, it should be noted that same reference numerals have been used to denote like elements throughout the specification.

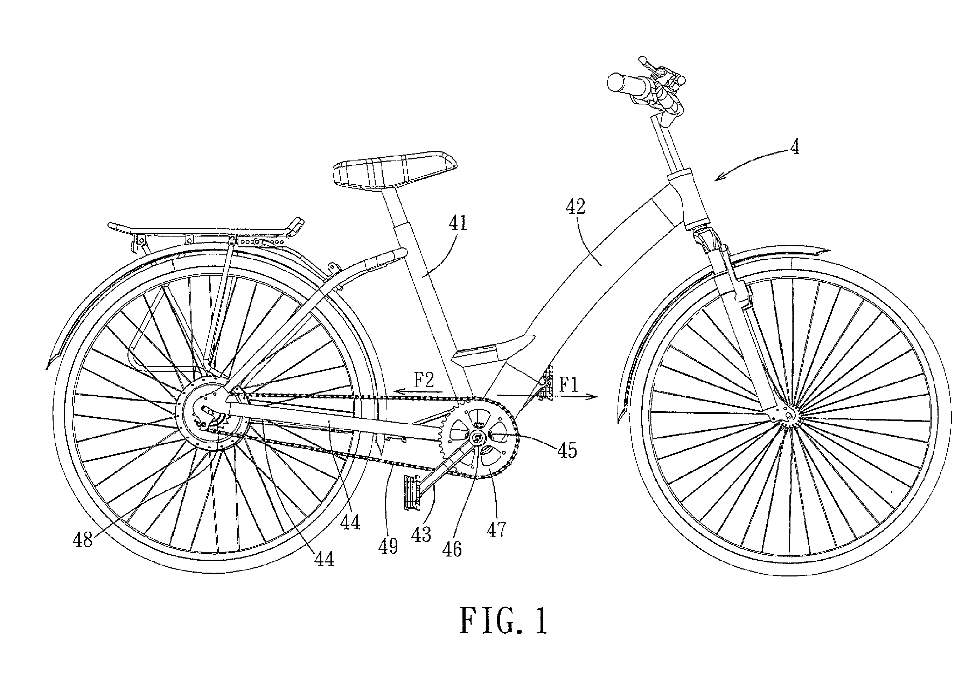

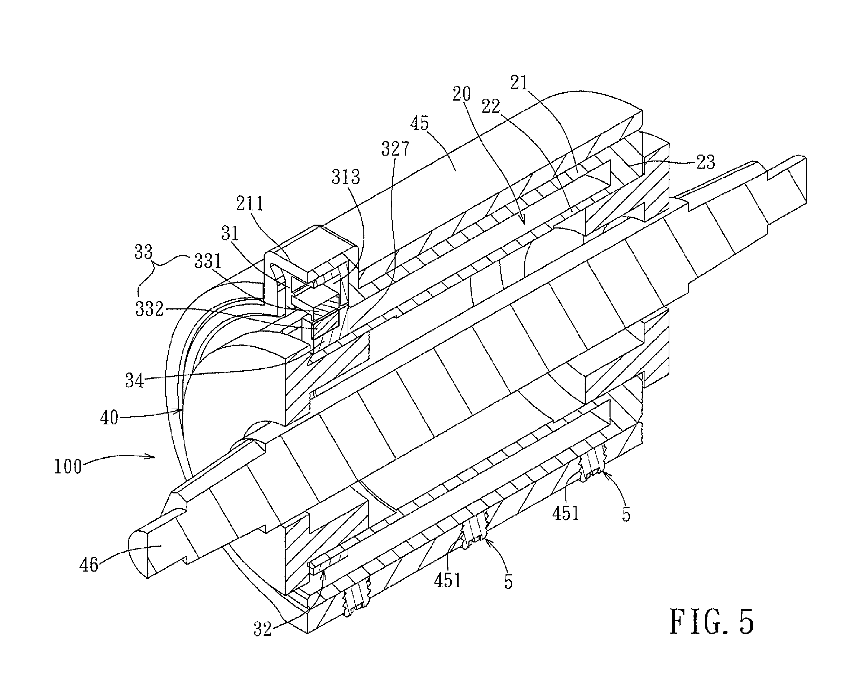

Referring to Figs. 1, 2 and 5, the first embodiment of a force measuring device 100 according to the present invention is adapted to be mounted in a bottom bracket assembly of a bicycle 4. The bottom bracket assembly includes a bottom bracket shell 45 which is connected to a seat tube 41, a down tube 42, and chain stays 44 of the bicycle 4, and which has a right shell segment. A spindle 46 to which a crankset 43 and a chainwheel 47 are connected is rotatably mounted relative to the bottom bracket shell 45 about a spindle axis so as to transmit a treading force (F1) to a rear wheel axle 48 by a chain 49 to move the bicycle 4 in a forward direction. The spindle 46 has a right spindle segment spacedly surrounded by the right shell segment of the bottom bracket shell 45. An antifriction bearing unit 40 is disposed between the spindle 46 and the bottom bracket shell 45. When the treading force (F1) is applied to move the spindle 46 as well as the chainwheel 47 and the chain 49 to move the bicycle 4 forward, a counterforce (F2) opposite to the treading force (F1) is generated to make slight movement of the spindle 46 relative to the bottombracket shell 45. Suchmovement is detected and measured by the force measuring device 100 of this invention.

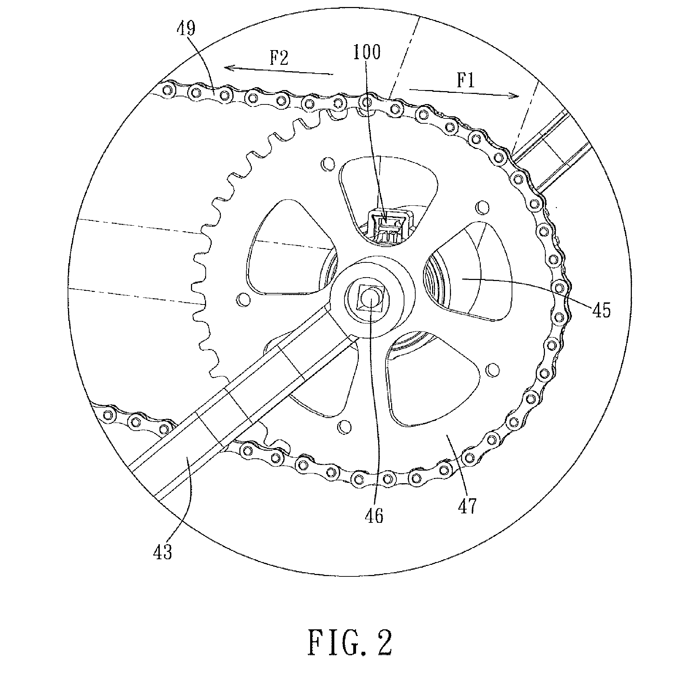

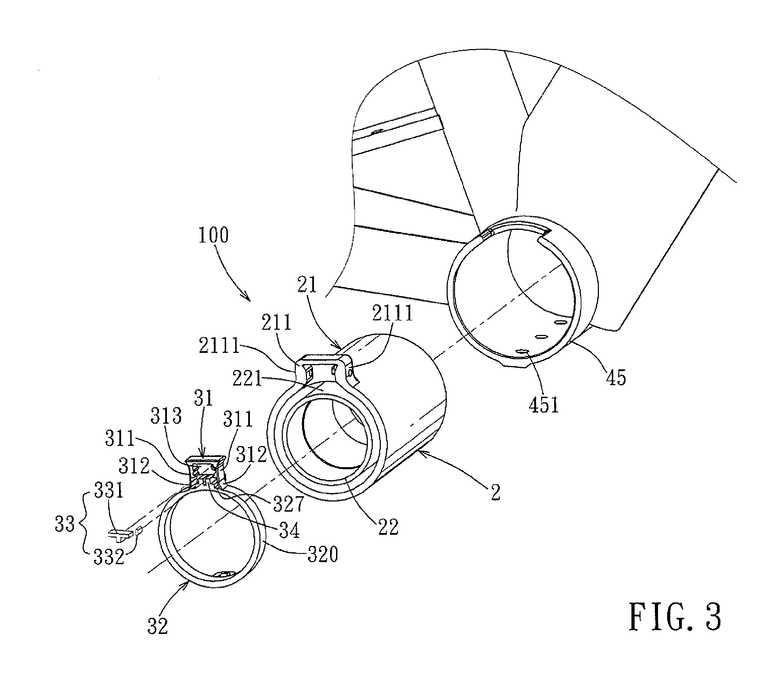

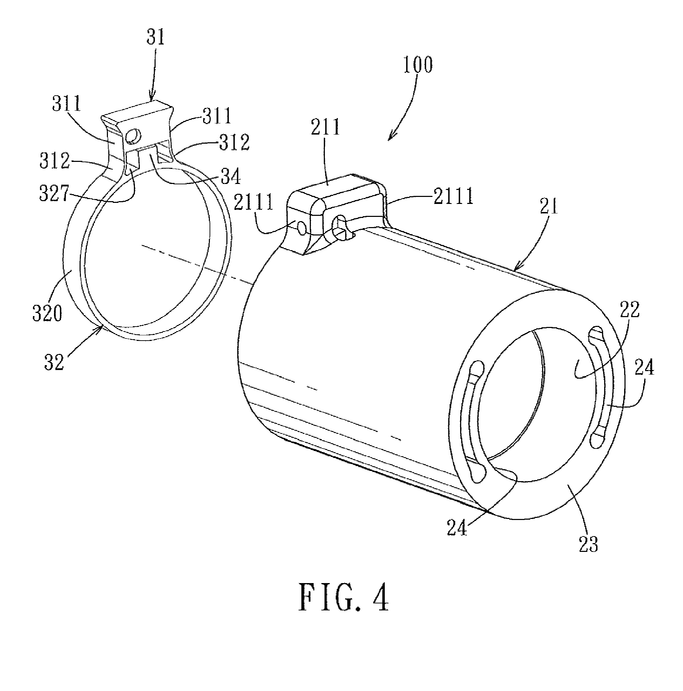

Referring to Figs. 2 to 5, the force measuring device of the first embodiment is shown to comprise a sleeve shell 2, a ring body 32, a sensor holding unit 31, a force transmitting mount 34, and a hall sensing unit 33.

The sleeve shell 2 is configured to be inserted between the spindle 46 and the bottom bracket shell 45, and has outer and inner tubular walls 21, 22 which are radially spaced apart from each other to define a surrounding clearance 20, and which are in abutting engagement with the right shell segment and the antifriction bearing unit 40, respectively. The sleeve shell 2 has a tubular connecting wall 23 disposed to interconnect left ends of the outer and inner tubular walls 21, 22, and a pair of slots 24 which are formed through the tubular connecting wall 23 to be in spatial communication with the surrounding clearance 20 and which extend angularly about the spindle axis so as to evenly reduce the rigidity thereof.

The ring body 32 is sleeved on a right end 221 of the inner tubular wall 22 to be movable with the inner tubular wall 22 when a treading force (F1) is exerted on the spindle 46, and has an outer ring surface 320 which confronts and is spaced apart from the outer tubular wall 21 and which has a shifting region 327 configured to make a shifting movement corresponding to the treading force (F1).

The sensor holding unit 31 is integrally formed with the ring body 32, and includes two arms 311 which respectively have lower arm segments 312 disposed on the shiftable region 327, which extend radially and upwardly from the shifting region 327 through the outer tubular wall 21, and which are spaced apart from each other in the forward direction to define a sensor activating zone 313 that confronts the shiftable region 327.

In this embodiment, the outer tubular wall 21 has a barrier portion 211 which extends circumferentially to terminate at forward and rearward barrier surfaces 2111. The sensor holding unit 31 is fitted in the barrier portion 211 such that the arms 311 are brought into abutting engagement with the forward and rearward barrier surfaces 2111 so as to ensure immovability of the sensor holding unit 31 relative to the outer tubular wall 21.

The force transmitting mount 34 is integrally formed with and is disposed on the shiftable region 327 between the lower arm segments 312, and extends radially toward the sensor activating zone 313.

The hall sensing unit 33 includes a sensor 331 supported by the arms 311 to be disposed in the sensor activating zone 313 so as to be held unmoved relative to the outer tubular wall 21 relative to the outer tubular wall 21 when the shiftable region 327 makes the shifting movement, and a magnetic member 332 mounted in the force transmitting mount 34 to be displaceable with the shifting movement of the shiftable region 327, and spaced apart from the sensor 331 by a predetermined distance. A measuring module (not shown) is disposed in the sensor activating zone 313 and electrically connected to the sensor 331. Therefore, under the interaction of the treading force (F1) and the counterforce (F2), the magnetic member 332 is displaced with the shifting movement of the ring body 32 relative to the sensor 331 to change a magnetic field generated thereby so as to give off a signal indicative of the magnitude of the treading force (F1).

Further, a plurality of fasteners 5 are disposed to be threadedly engaged with screw holes 451 formed in the bottom bracket shell 45 to abut against the sleeve shell 2 so as to detachably fasten the force measuring device 100 to the bottom bracket shell 45.

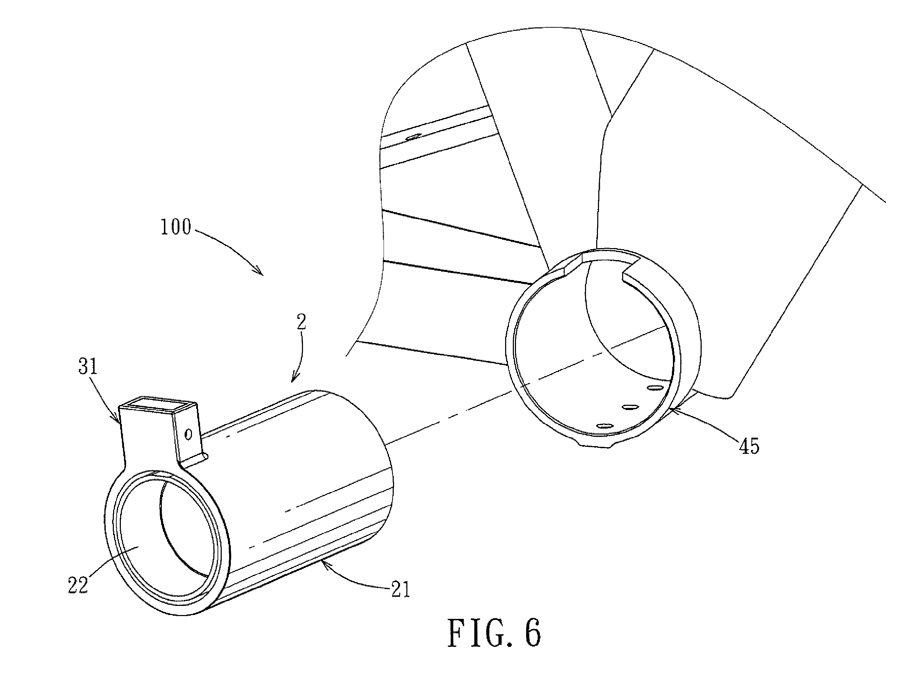

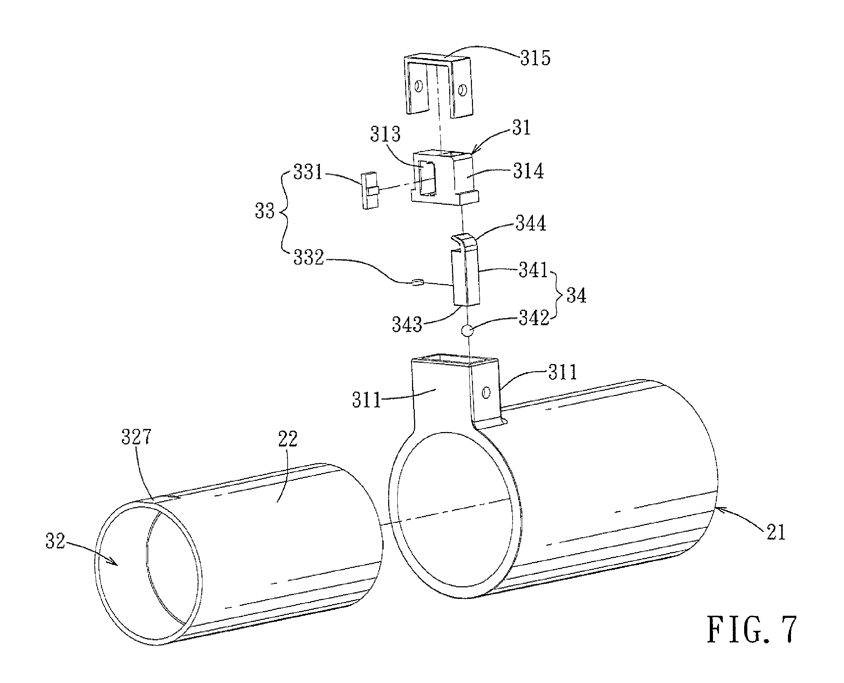

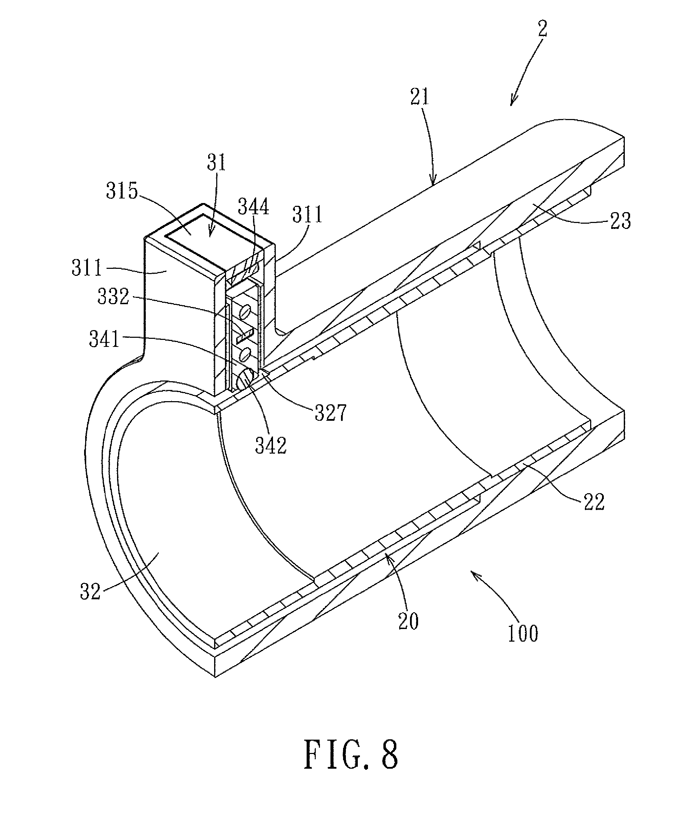

Referring to Figs. 6 to 8, the second embodiment of the force measuring device according to this invention is similar to the first embodiment in construction. In the second embodiment, the ring body 32 is integrally formed with the inner tubular wall 22. The sensor holding unit 31 has two arms 311 which are integrally formed with the outer tubular wall 21 and which are spaced apart from each other in a direction of the spindle axis, a housing 314 which is disposed between the arms 311 and which defines the sensor activating zone 313 therein, and an abutment wall 315 which is disposed on the housing 314 and which extends axially to join the arms 311. Additionally, the force transmitting mount 34 has a movable carrier 341 which is configured to permit the magnetic member 332 to be mounted therein, and which is movably disposed in the housing 314, and a force transmitting member 342 which is disposed between the shiftable region 327 and the movable carrier 341, and which is configured to transmit the shiftable movement to urge the movable carrier 341 toward the abutment wall 315. In this embodiment, the force transmitting member 342 is in the form of a ball 342. The movable carrier 341 has a pushed end 343 which abuts against the ball 342 so as to be urged by the shifting movement, and a biasing end 344 which is in the form of a tongue integrally formed with the movable carrier 341 to yield radially and to abut against the abutment wall 315 so as to provide a biasing action to counteract the urging action of the shifting movement. Further, the sensor 331 is spaced apart from the movable carrier 341 in a forward direction. Therefore, by virtue of the movable carrier 341, the magnetic member 332 is kept to be spaced apart from the sensor 331 so as to prevent contact with the sensor 331 during the displacement thereof. Moreover, by means of the housing 314 and the movable carrier 341, replacement of the sensor 331 and the magnetic member 332 can be conveniently made.

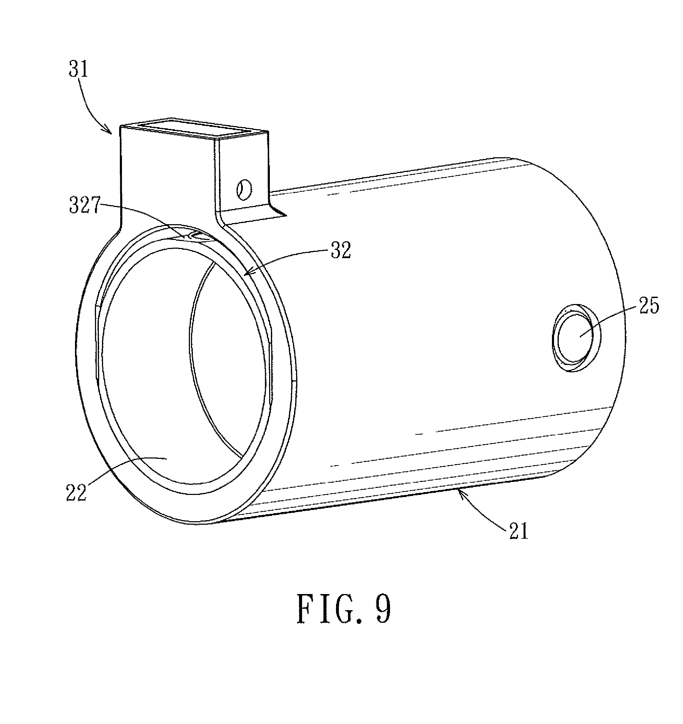

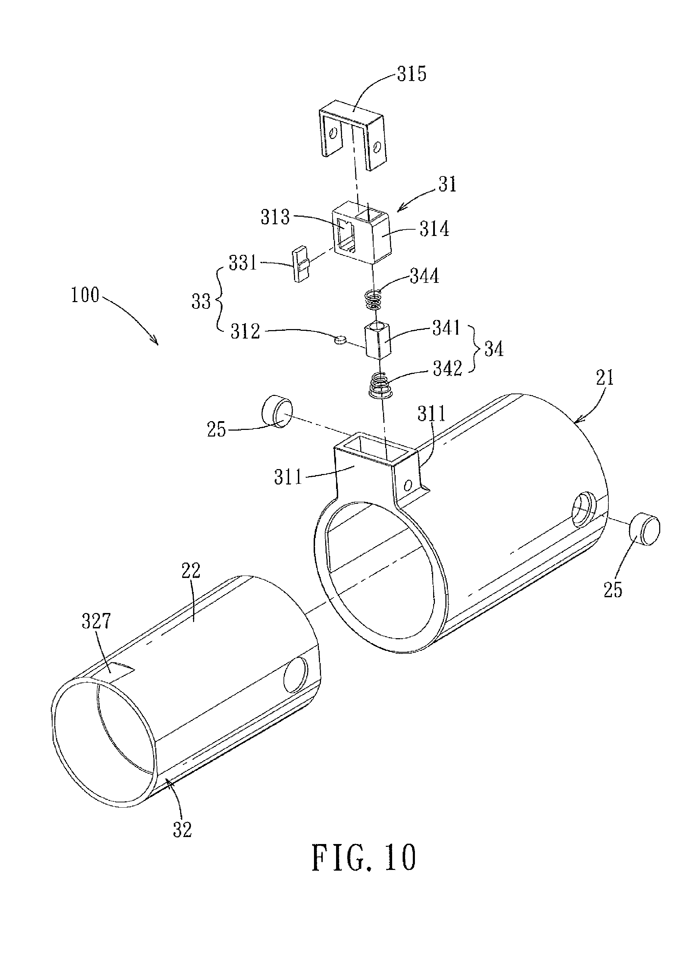

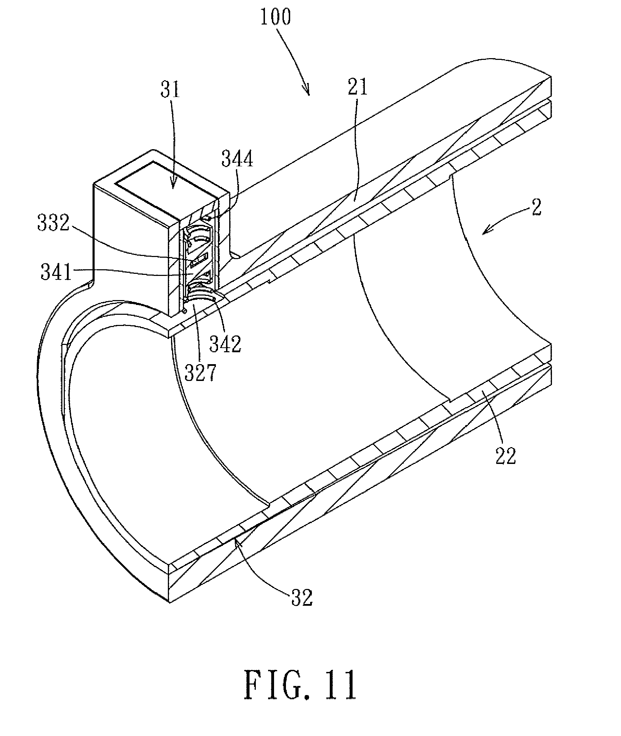

Referring to Figs. 9 to 11, the third embodiment of the force measuring device according to this invention is similar to the second embodiment in construction, except that the force transmitting member 342 is a coil spring, and the biasing end 344 is in the form of a coil spring which abuts against the abutment wall 315 so as to provide a biasing action to counteract the urging action of the shifting movement. Moreover, the outer and inner tubular walls 21, 22 are in spline engagement with each other. A plurality of pegs 25 are further disposed to interconnect the outer and inner tubular walls 21, 22 to prevent axial movement therebetween.

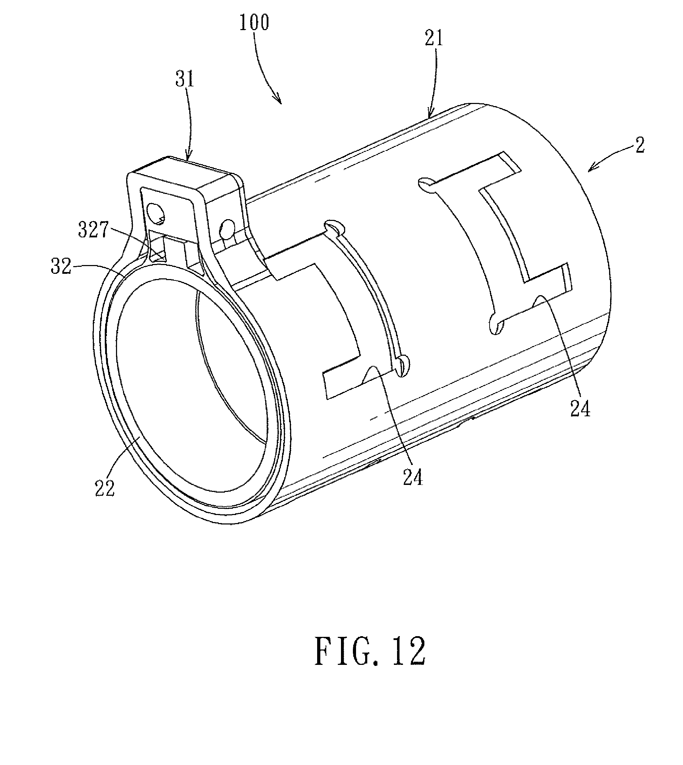

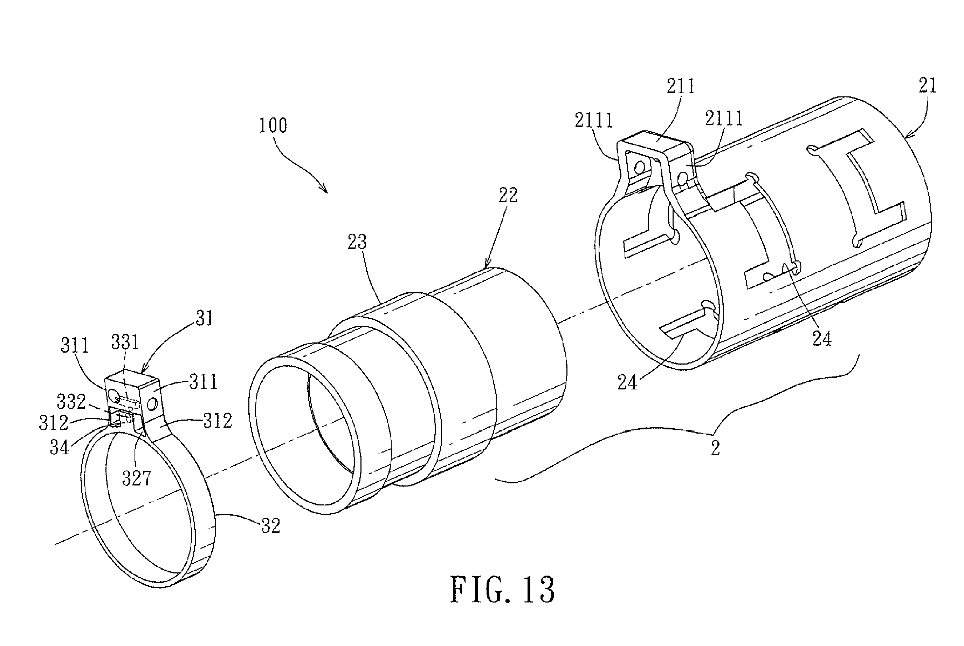

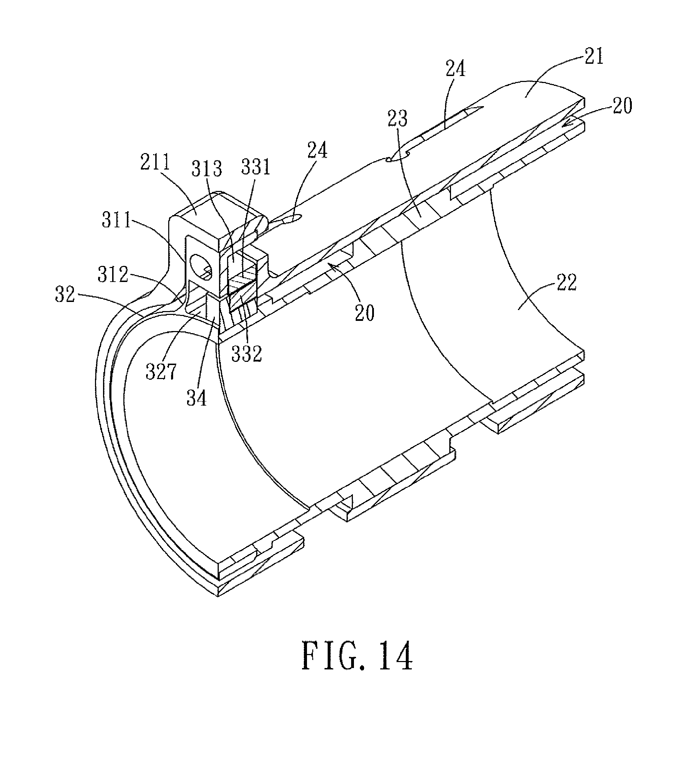

Referring to Figs. 12 to 14, the fourth embodiment of the force measuring device according to this invention is similar to the first embodiment in construction, except that the tubular connecting wall 23 is disposed between middle portions of the outer and inner tubular walls 21, 22 to form two surrounding clearances 20 therebetween. The outer tubular wall 21 has a plurality of slots 24 in spatial communication with the surrounding clearances 20 to minimize the mass of the outer tubular wall 21 to make the force measuring device lighter while preventing the outer tubular wall 21 from affecting the shifting movement.

As illustrated, the force measuring device of this invention is adapted to be mounted in a bottom bracket assembly of a bicycle to detect deformation of the sleeve shell 2 during pedaling of the bicycle so as to accurately measure the treading force applied to the bicycle.

## Claims

1. A force measuring device adapted to be mounted in a bottom bracket assembly of a bicycle (4), the bottom bracket assembly including a bottom bracket shell (45) which is connected to a seat tube (41), a down tube (42), and chain stays (44) of the bicycle (4), and which has a right shell segment, a spindle (46) to which a crankset (43) and a chainwheel (47) are connected, which is rotatably mounted relative to the bottom bracket shell (45) about a spindle axis, and which has a right spindle segment that is spacedly surrounded by the right shell segment, and an antifriction bearing unit (40) which is disposed between the spindle (46) and the bottom bracket shell (45), **characterized by comprising:**
a sleeve shell (2) configured to be inserted between the spindle (46) and the bottombracket shell (45), and having outer and inner tubular walls (21, 22) which are radially spaced apart from each other to define a surrounding clearance (20), and which are adapted to be in abutting engagement with the right shell segment and the antifriction bearing unit (40), respectively;
a ring body (32) which is disposed on and movable with said inner tubular wall (22), and which has an outer ring surface (320) that confronts and is spaced apart from said outer tubular wall (21), said outer ring surface (320) having a shiftable region (327) which is configured to make a shifting movement corresponding to a treading force (F1) exerted on the spindle (46);
a sensor holding unit (31) which defines a sensor activating zone (313) that confronts said shiftable region (327), and which extends radially through said outer tubular wall (21); and
a hall sensing unit (33) including
a sensor (331) disposed in said sensor activating zone (313), and held to be unmoved relative to said outer tubular wall (21), and
a magnetic member (332) disposed to be displaceable with the shifting movement of said shiftable region (327), and spaced apart from said sensor (331) by a predetermined distance such that a magnetic field generated thereby is changed when said magnetic member (332) is displaced with the shifting movement so as to give off a signal indicative of the magnitude of the treading force (F1).

2. The force measuring device as claimed in Claim 1, further **characterized by** a force transmitting mount (34) which is disposedon said shiftable region (327), which extends radially toward said sensor activating zone (313), and which is configured to permit said magnetic member (332) to be mounted therein.

3. The force measuring device as claimed in Claim 2, **characterized in that** said sensor holding unit (31) includes two arms (311) which extend radially from one of said shiftable region (327) and said outer tubularwall (21) to cooperatively define said sensor activating zone (313).

4. The force measuring device as claimed in Claim 3, **characterized in that** said arms (311) are spaced apart from each other in a forward direction, and respectively have lower arm segments (312) which are disposed on said shiftable region (327), and which cooperatively flank said force transmitting mount (34).

5. The force measuring device as claimed in Claim 4, **characterized in that** said outer tubular wall (21) has a barrier portion (211) which extends circumferentially to terminate at forward and rearward barrier surfaces (2111), said sensor holding unit (31) being fitted in said barrier portion (211) such that said arms (311) are brought into abutting engagement with said forward and rearward barrier surfaces (2111) so as to ensure immovability of said sensor (331) relative to said outer tubular wall (21) when said shiftable region (327) makes the shifting movement.

6. The force measuring device as claimed in Claim 4, **characterized in that** said sleeve shell (2) has a tubular connecting wall (23) which is disposed to interconnect said outer and inner tubular walls (21, 22), and a pair of slots (24) which are formed through one of said tubular connecting wall (23) and said outer tubular wall (21) to be in spatial communication with said surrounding clearance (20) and which extend angularly about the spindle axis so as to reduce the rigidity thereof to facilitate the shifting movement.

7. The force measuring device as claimed in Claim 3, **characterized in that** said ring body (32) is integrally formed with said inner tubular wall (22), said arms (311) being spaced apart from each other in a direction of the spindle axis.

8. The force measuring device as claimed in Claim 7, **characterized in that** said sensor holding unit (31) has an abutment wall (315) which extends axially to join said arms (311) so as to cooperate with said arms (311) to define said sensor activating zone (313), said force transmitting mount (34) having
a movable carrier (341) which is configured to permit said magnetic member (332) to be mounted therein, and which is disposed in said sensor activating zone (313), and
a force transmitting member (342) which is disposed between said shiftable region (327) and said movable carrier (341), and which is configured to transmit the shiftable movement to urge said movable carrier (341) toward said abutment wall (315).

9. The force measuring device as claimed in Claim 8, **characterized in that** said sensor (331) is spaced apart from said movable carrier (341) in a forward direction, saidmovable carrier (341) havingapushed end (343) which abuts against said force transmitting member (342) so as to be urged by the shifting movement, and a biasing end (344) which abuts against said abutment wall (315) to provide a biasing action to counteract the urging action of the shifting movement.

10. The force measuring device as claimed in Claim 9, **characterized in that** said force transmitting member (342) is in form of a ball, and said biasing end (344) is in form of a tongue which is integrally formed with said movable carrier (341) and which yields radially.

11. The force measuring device as claimed in Claim 9, **characterized in that** said force transmitting member (342) is a coil spring, and said biasing end (344) is in form of a coil spring which abuts against said abutment wall (315) so as to provide a biasing action to counteract the urging action of the shifting movement.

12. The force measuring device as claimed in Claim 9,
**characterized in that** said outer and inner tubular walls (21, 22) are in spline engagement with each other, said force measuring device being further **characterized by** a plurality of pegs (25) disposed to interconnect said outer and inner tubular walls (21, 22) to prevent axial movement therebetween.
